# EUROPÄISCHE PATENTANMELDUNG

(11) **EP 2 587 368 A1**
(43) Veröffentlichungstag der Anmeldung: **01.05.2013**
(21) Anmeldenummer: 11186562.2
(22) Anmeldetag: 25.10.2011
(51) Int. Cl.: G06F 9/44

(54) **Verfahren und Vorrichtung für einen Austausch von Programmcode zwischen einer Programmerzeugungseinheit und einer Programmierumgebung**

(71) Anmelder: Siemens Aktiengesellschaft, 80333 München (DE)
(72) Erfinder: Labas, Attila, 53125 Bonn ST Brüser Berg (DE); Schlosser, Michael, 91126 Schwabach (DE)

(57) **Zusammenfassung**

Die Erfindung betrifft ein Verfahren für den Austausch von Programmcode zwischen einer Programmerzeugungseinheit (PE) und einer Programmierumgebung (PU), wobei in der Programmerzeugungseinheit (PE) anhand von Befehlen (MACRO1, PL2, MACR03, PL4) einer Meta-Beschreibungssprache aus Bibliotheks-Elementen jeweils Abschnitte (CF1,..., CF4) von Programmcodes erzeugt werden, wobei der Programmcode an die Programmierumgebung (PU) übertragen, dort bearbeitet wird und danach zu der Programmerzeugungseinheit (PE) zurück übertragen wird. Dabei wird bei der Erzeugung des Programmcodes jedem der Abschnitte (CF1,..., CF4) als ein Kommentar (/*...*/) der zugrundeliegende Befehl (MACRO1, PL2, MACR03, PL4) der Meta-Beschreibungssprache zugeordnet und gespeichert, wobei nach der Rückübertragung des bearbeiteten Programmcodes durch die Programmerzeugungseinheit (PE) für jeden Abschnitt (CF1, CF2-B, CF3, CF4) des Programmcodes anhand des im Kommentar (/*...*/) verzeichneten Befehls (MACRO1, PL2, MACR03, PL4) und dem anhand dessen aufgefundenen ursprünglichen Programmcodes und anhand des zugeordneten Abschnitts (CF1, CF2-B, CF3, CF4) im zurück übertragenen Programmcode anhand eines Vergleichs (V) festgestellt wird, ob der betreffende Abschnitt (CF1, CF2-B, CF3, CF4) bearbeitet wurde, wobei die Änderungen (CF2-B) im zurück übertragenen Programmcode kenntlich gemacht werden. Die im Engineering-System (Programmerzeugungseinheit) gehaltenen Planungsdaten können somit auf einfache Weise am sog. "Ist-Stand" der Anlage gespiegelt werden.

## Beschreibung

Die Erfindung betrifft ein Verfahren für den bidirektionalen Austausch von Programmcode zwischen einer Programmerzeugungseinheit und einer Programmierumgebung gemäß dem Oberbegriff des Patentanspruchs 1, und eine Programmerzeugungseinheit gemäß dem Oberbegriff des Patentanspruchs 10.

Für die Planung und Programmierung von komplexen Automatisierungsanordnungen, beispielsweise große Fabrikationsanlagen, Chemie-Werke etc., werden oft sog. "Engineering-Systeme" eingesetzt, also übergeordnete Projektierungssysteme, bei denen in einem Projekt-Baum oder in einer ähnlichen Darstellung eine Vielzahl oder alle "Knoten" oder "Facetten" einer Automatisierungsanordnung abgebildet werden. Jede Hierarchie-Ebene eines solchen funktionalen Baumes umfasst die Informationen für ein bestimmtes Zielsystem (Knoten) der Anordnung. Ein solches Engineering-System ist beispielsweise das Produkt "Automation Designer" des Herstellers Siemens.

In einem solchen Engineering-System werden für jedes Zielsystem Daten eingegeben bzw. erzeugt, die zu diesem Zielsystem oder zu anderen Planungs- und Betriebseinrichtungen übertragen und dort weiterverarbeitet werden. Eine wichtige Aufgabe ist dabei die (teil-)automatisierte Programmerzeugung, beispielsweise für speicherprogrammierbare Steuerungen, Bedien- und Beobachtungsgeräte etc. Dazu können in dem Engineering-System Befehle eingegeben werden, beispielsweise in einer sog. "Meta-Beschreibungssprache". Eine solche Meta-Beschreibungssprache umfasst regelmäßig nicht die konkreten Befehle und nicht die Syntax, die zur Programmierung eines untergeordneten Zielsystems verwendet werden, sondern vielmehr Anweisungen an das Engineering-System, die zu einer automatischen Code-Generierung verwendet werden. So können solche Befehle beispielsweise Platzhalter für sog. "Code-Fragmente", also Programm-Abschnitte, aus Bibliotheken sein, oder sog. "MACROs", also beispielsweise Schleifen oder ähnliche Konstrukte, die bei ihrer Ausführung wiederum zur Erzeugung von Code-Fragmenten (Programm-Abschnitten) führen. Wegen dieser Funktionalität des Engineering-Systems, die zur Programmerzeugung dient, ist ein solches Engineering-System ein Beispiel einer im Folgenden als "Programmerzeugungseinheit" bezeichneten Komponente.

Der derart automatisch aus den Befehlen der "Meta-Beschreibungs-Sprache" erzeugte Programmcode muss häufig noch bearbeitet werden, bevor er zum endgültigen ablauffähigen Programm (Maschinen-Code, Object-Code o.ä.) kompiliert werden kann. Dazu ist jedem Zielsystem ein sog. Projektierungssystem zugeordnet, also ein Arbeitsplatz, mit dem für das entsprechende Zielsystem Programmcode bearbeitet (editiert), kompiliert, getestet und auf ein Zielsystem übertragen werden kann. Ein solches Projektierungssystem, beispielsweise das Produkt "Step 7" für Automatisierungskomponenten des Herstellers Siemens, soll im Folgenden "Programmierumgebung" genannt werden. Wenn in einer solchen Programmierumgebung ein (ggf. automatisch erzeugter) Programmcode verändert wird, ist es häufig gewünscht, die Änderungen auch in das Engineering-System, also die Programmerzeugungseinheit, zurück zu übernehmen; dies wird auch als "Round-Trip Engineering" bezeichnet. In der Programmerzeugungseinheit sollen die Änderungen zumindest sichtbar gemacht werden, oft jedoch auch in die zur Programmerzeugung verwendete Bibliotheken übernommen werden. D.h., dass der geänderte Programmcode in die Programmerzeugungseinheit zurückgeführt wird, wobei dort - oft manuell oder mit manueller Unterstützung - verglichen werden muss, welche Abschnitte (Code-Fragmente) geändert wurden, und welche nicht. Während die nicht veränderten Abschnitte in der Programmerzeugungseinheit, also im Engineering-System, zur besseren Übersichtlichkeit auch wieder als Befehle in der Meta-Beschreibungssprache dargestellt werden können, müssen die geänderten Abschnitte als Programmcode sichtbar gemacht werden, damit die Änderungen von einem Bediener der Programmerzeugungseinheit nachvollzogen und kontrolliert werden können, so dass entschieden werden kann, ob die entsprechenden Änderungen in das Engineering-Projekt übernommen werden sollen, verworfen werden sollen, oder ggf. sogar in die zugrundeliegenden Bibliotheks-Elemente übernommen werden sollen.

Der zur Kenntlichmachung der Unterschiede (Veränderungen, Bearbeitungen, Löschungen etc.) erforderliche Vergleich zwischen den ursprünglich generierten Abschnitten des Programmcodes und den in die Programmerzeugungseinheit zurück übertragenen Abschnitten des Programmcodes ist aufwendig und fehleranfällig. Insbesondere in solchen Code-Abschnitten, in denen viele Änderungen vorgenommen wurden, ist oft nicht oder nicht einfach nachvollziehbar, welcher ursprüngliche Code-Abschnitt diesem geänderten Abschnitt zugrunde gelegen hat. Rein maschinelle Vergleiche liefern dabei häufig unübersichtliche Ergebnisse.

Es ist also eine Aufgabe der vorliegenden Erfindung, bei einer Programmcode-Erzeugung durch eine Programmerzeugungseinheit, der anschließenden Bearbeitung in einer Programmierumgebung und der anschließenden Rück-Übertragung des Programmcodes in die Programmerzeugungseinheit die Identifizierung von Änderungen zu verbessern.

Der erfindungsgemäßen Lösung der Aufgabe liegt die Erkenntnis zugrunde, dass die für die Generierung des Programmcodes in der Programmerzeugungseinheit verwendeten Befehle in der Meta-Beschreibungssprache auf Kommentare bzw. Kommentar-Zeilen des erzeugten Programms abgebildet werden können, wobei diese Kommentare bei der späteren Kompilierung zu ausführbarem Programmcode in der Regel nicht weiter stören, jedoch dazu führen, dass nach einer Rück-Übertragung des bearbeiteten Programms eine abschnittsweise Zuordnung zu dem ursprünglich generierten Programm vereinfacht wird, wodurch wiederum der abschnittsweise Vergleich der beiden Programmcode-Versionen erleichtert wird. Auf diese Weise lassen sich auf einfache Weise diejenigen Abschnitte im Programmcode, in denen außerhalb der Programmerzeugungseinheit Änderungen vorgenommen wurden, durch einen einfachen Textvergleich identifizieren und darstellen.

Die Aufgabe wird insbesondere durch ein Verfahren gemäß dem Patentanspruch 1 und eine Einrichtung gemäß dem Patentanspruch 10 gelöst.

Dabei wird ein Verfahren für den bidirektionalen Austausch von Programmcode zwischen einer Programmerzeugungseinheit und einer Programmierumgebung vorgeschlagen, wobei in der Programmerzeugungseinheit anhand von Befehlen einer Meta-Beschreibungssprache aus Bibliotheks-Elementen jeweils Abschnitte von Programmcode erzeugt werden, wobei die Summe der Abschnitte einen gesamten Programmcode ergibt, wobei dieser gesamte Programmcode an die Programmierumgebung übertragen und mittels der Programmierumgebung bearbeitet wird, und wobei der bearbeitete gesamte Programmcode zu der Programmerzeugungseinheit zurück übertragen wird. Dabei wird bei der Erzeugung des Programmcodes in dem erzeugten gesamten Programmcode jedem der Abschnitte als ein Kommentar der zugrundeliegende Befehl der Meta-Beschreibungssprache zugeordnet und zu dem jeweiligen Abschnitt gespeichert, wobei nach der Rückübertragung des gesamten, bearbeiteten Programmcodes durch die Programmerzeugungseinheit für jeden Abschnitt des Programmcodes anhand des im Kommentar verzeichneten Befehls und dem dadurch identifizierten ursprünglichen Abschnittes des erzeugten Programmcodes und anhand des zugeordneten Abschnitts im zurück übertragenen gesamten Programmcodes anhand eines Vergleichs festgestellt wird, ob der betreffende Abschnitt bearbeitet wurde, und wobei in der Programmerzeugungseinheit die aus der Bearbeitung in der Programmierumgebung resultierenden Änderungen im zurück übertragenen Programmcode kenntlich gemacht werden. Die im Engineering-System (Programmerzeugungseinheit) gehaltenen Planungsdaten können somit jederzeit den sog. "Ist-Stand" der Anlage bzw. der einzelnen Maschine darstellen. Es ist möglich, das Engineering-System nicht nur in der Planungsphase als ein zentrales Werkzeug zur einmaligen Generierung von "Basis-Code" für verschiedene Projektierungs-Systeme (Programmierumgebungen) zu nutzen, sondern auch, in einer Betriebsphase jeweils den aktuellen Stand für weitere Engineering-Aufgaben zur Verfügung zu stellen. Die bei untergeordneten Verarbeitungsschritten vorgenommenen Änderungen lassen sich durch das beschriebene Verfahren leicht identifizieren, wobei eine bessere und genauere Zuordnung von geändertem Programmcode zu den ursprünglichen Generierungs-Befehlen möglich ist.

Dieselben Vorteile werden durch eine Programmerzeugungseinheit realisiert, die zur Ausführung des beschriebenen Verfahrens eingerichtet ist.

Vorteilhafte Ausgestaltungen des erfindungsgemäßen Verfahrens sind in den abhängigen Patentansprüchen angegeben. Die dabei beschriebenen Merkmale und Vorteile können entweder einzeln, aber auch in Kombination miteinander verwirklicht werden, und sie gelten sinngemäß auch für die erfindungsgemäße Anordnung.

In einer ersten Variante kann der zurück übertragene Programmcode vollständig, ggf. inklusive der zugrunde liegenden Befehle, dargestellt werden. In einer vorteilhaften Ausgestaltung werden jedoch diejenigen Abschnitte des zurück übertragenen Programmcodes, die in der Programmierumgebung zwischenzeitlich nicht verändert worden, lediglich in Form der diesen zugrunde liegenden Befehle in der "Meta-Beschreibungssprache" dargestellt, während veränderte Abschnitte (Code-Fragmente) vollständig mit ihrem geänderten Programmcode dargestellt werden. Vorteilhaft wird dabei innerhalb eines Abschnitts hinzugefügter Programmcode hervorgehoben (beispielsweise durch eine andere Farbe oder Fettdruck), und zwischenzeitlich gestrichener Programmcode wird vorteilhaft auf eine andere Art und Weise hervorgehoben, beispielsweise mittels durchgestrichener Buchstaben, roter Einfärbung etc.

In einer weiteren vorteilhaften Ausgestaltung wird im Zuge einer zumindest abschnittsweisen Darstellung des zurück übertragenen Programmcodes auch der korrespondierende ursprüngliche Programmcode zumindest abschnittsweise dargestellt, wodurch ein direkter Vergleich der ursprünglichen und der geänderten Varianten ein- und desselben Abschnitts möglich ist. Dabei kann in einer besonders vorteilhaften Ausgestaltung mit sog. "Schichten" gearbeitet werden, d.h., dass die beiden Versionen des Programmcodes nach der Art transparenter Folien übereinander "gelegt" werden, so dass Änderungen besonders gut ins Auge fallen.

Auch der ursprüngliche Programmcode wird bei einer zumindest abschnittsweisen Darstellung vorteilhaft für diejenigen Abschnitte, bei denen zwischenzeitlich keine Bearbeitung vorgenommen wurde, lediglich anhand der Befehle in der Meta-Beschreibungssprache dargestellt, wodurch sich eine übersichtlichere Ansicht ergibt und wodurch das Augenmerk eines Benutzers besser auf geänderte Abschnitte gelenkt wird.

In einer weiteren vorteilhaften Ausgestaltung können, ggf. nach einer manuellen Eingabe einer Bestätigung oder nach einer Befehlseingabe eines Benutzers, die aus der Bearbeitung resultierenden Veränderungen in den jeweiligen Abschnitten des Programmcodes in die bei der Programm-Generierung verwendeten Bibliotheks-Elemente übernommen werden. Somit stehen solche Veränderungen automatisch bei anderen Projekten oder späteren Generierungen von Programmcode zur Verfügung.

Es ist wesentlich, dass die Befehle in der Meta-Beschreibungssprache derart in den generierten Programmcode eingefügt bzw. übernommen werden, dass bei einer nachfolgenden Verarbeitung, z.B. in einer Programmierumgebung, keine Störungen auftreten. Dies geschieht erfindungsgemäß dadurch, dass die Befehle auf Kommentare bzw. Kommentar-Zeilen oder funktional ähnliche Elemente abgebildet werden, die bei einer späteren Kompilierung des Programmcodes außer Acht bleiben. Um eine "Rückübersetzung" der zurück übertragenen Abschnitte in die zugrunde liegende Meta-Beschreibungssprache nicht zu gefährden, können die Kommentare bzw. Kommentar-Zeilen, in die die Befehle abgebildet wurden, vorteilhaft gegen eine Veränderung in der Programmierumgebung bzw. außerhalb der Programmerzeugungseinheit gesperrt werden. Dazu bietet es sich an, in den Kommentaren bzw. den Kommentarzeilen entsprechende Steuerzeichen unterzubringen, die von einem Editor der Programmierumgebung entsprechend interpretiert werden und dazu führen, dass die Kommentare bzw. Kommentarzeilen nicht oder nur nach Ausgabe einer entsprechenden Warnung hinzugefügt, verändert oder gelöscht werden können.

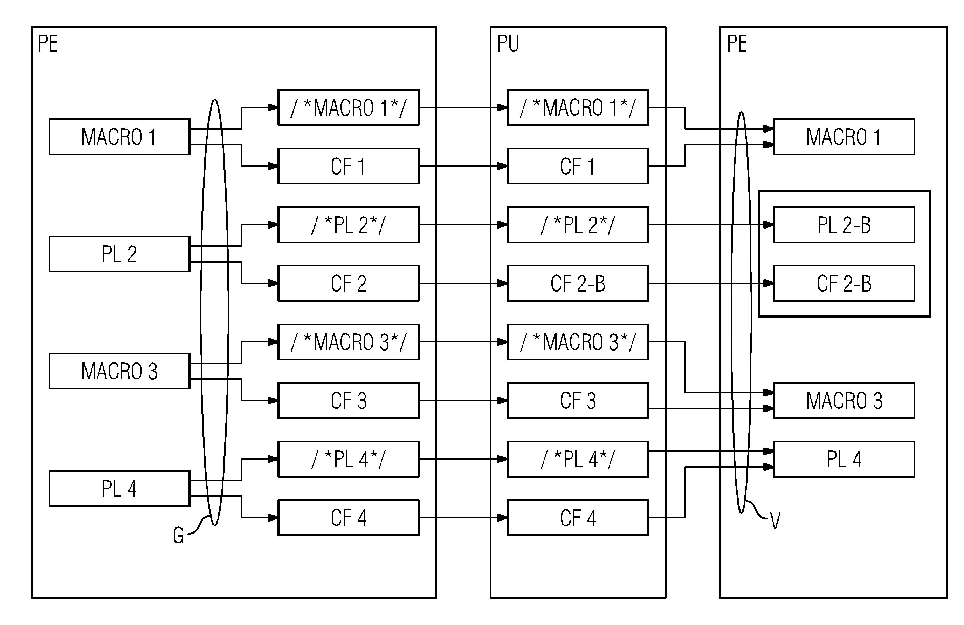

Ein Ausführungsbeispiel des erfindungsgemäßen Verfahrens wird nachfolgend anhand der Zeichnung erläutert; es dient gleichzeitig der Erläuterung einer erfindungsgemäßen Programmerzeugungseinheit.

Dabei zeigt die einzige Figur in einer schematischen Darstellung, bezogen auf die Zeichnung in einer Abfolge von links nach rechts, die Generierung von Programmcode aus Befehlen in einer Meta-Beschreibungssprache, die Übertragung des Programmcodes von der Programmerzeugungseinheit zu einer Programmierumgebung, die dortige Bearbeitung eines Abschnitts des Programmcodes, die Rückübertragung des geänderten Programmcodes an die Programmerzeugungseinheit, den Vergleich des ursprünglichen und des geänderten Programmcodes anhand der auf Kommentare abgebildete Befehle und die Darstellung des geänderten Programmcodes bzw. geänderten Abschnitts in der Programmerzeugungseinheit.

In der Figur ist schematisch als ein Engineering-System eine Programmerzeugungseinheit PE dargestellt, wobei im Folgenden für die Beschreibung der ersten Verfahrensschritte auf die schematische Darstellung im linken Teil der Abbildung Bezug genommen wird. Dabei sind in einer ersten, linken Spalte die Befehle MACRO1, PL2, MACR03, PL4 in einer Meta-Beschreibungssprache dargestellt. Bei den "MACRO"-Befehlen handelt es sich um sog. "Inline-Makros", also Befehlszeilen, die beispielsweise Schleifen oder Bedingungen enthalten und bei einer Generierung G abgearbeitet werden, wobei bei der Abarbeitung (Generierung G) dieser "Inline-Makros" Abschnitte CF1, CF3 mit Programmcode erzeugt werden. Die Befehle PL2, PL4 stellen als ein weiteres Beispiel für Befehle einer Meta-Beschreibungssprache sog. Platzhalter dar, wobei im Zuge der Generierung G diese Platzhalter PL2, PL4 durch entsprechenden Programmcode aus einer Software-Bibliothek, sog. "Bibliotheks-Elemente", ersetzt werden. Diese Bibliotheks-Elemente finden sich für den Platzhalter PL2 im erzeugten Programmcode als Abschnitt CF2 wieder, und für den Platzhalter PL4 als Abschnitt des Programmcodes CF4; die Abkürzung "CF" steht dabei für "Code-Fragment".

Der durch die Generierung G erzeugte Programmcode ist in der von links gesehen zweiten Spalte der Abbildung dargestellt als Blöcke dargestellt. Dabei werden erfindungsgemäß die für die Programmerzeugung bzw. Generierung G verwendeten Befehle MACRO1, PL2, MACR03, PL4 jeweils auf Kommentarzeilen abgebildet, die in dem gesamten erzeugten Programmcode räumlich den jeweiligen Abschnitten mit Programmcode zugeordnet sind. Dies bedeutet am Beispiel des Befehls MACRO 1, dass eine Kommentarzeile /*MACRO1*/ erzeugt wird, dem direkt der mittels des Befehls MACRO1 erzeugte Abschnitt CF1 mit Programmcode nachfolgt. Optional kann nach diesem Abschnitt CF1 eine weitere Kommentar-Zeile angeordnet sein, mit der auf das Ende der mittels des Befehls MACRO1 erzeugten Programmcodes CF1 hingewiesen wird. Ebenso sind die weiteren Befehle PL2, MACR03, PL4 durch die Generierung G in entsprechende Kommentarzeilen mit nachfolgenden Code-Abschnitten CF2, CF3, CF4 umgesetzt worden.

Der bei der Generierung erzeugte gesamte Programmcode, der also aus Kommentarzeilen und den Abschnitten mit Programmcode besteht, wird zur weiteren Bearbeitung an die Programmierumgebung PU übertragen, die ein Beispiel für ein bekanntes Projektierungssystem darstellt. In der Figur ist ein Fall dargestellt, bei dem die Abschnitte CF1, CF3, CF4 des gesamten Programmcodes am Arbeitsplatz der Programmierumgebung nicht angetastet werden, also nicht verändert werden. Im Gegensatz dazu sei angenommen, dass der Abschnitt CF2 mittels der Programmierumgebung bearbeitet wird, so dass ein geänderter Abschnitt CF2-B ("bearbeitet") entsteht. Der Unterschied zwischen den Abschnitten CF2 und CF2-B kann beispielsweise darin bestehen, dass eine Zeile mit Programmcode hinzugefügt wurde. Prinzipiell kann das derart geänderte Projekt, also der Programmcode, der in nunmehr geänderter Form in der Programmierumgebung PU vorliegt, zu einem durch Maschinen ausführbaren Programm kompiliert und in eine Ziel-Hardware übertragen werden. Hier sei allerdings der Fall betrachtet, bei dem das geänderte Projekt, also der geänderte Programmcode, wieder in die Programmerzeugungseinheit PE (Engineering-System) zurück übertragen werden soll, um dort weiter verarbeitet zu werden.

Die Übertragung des geänderten Programmcodes ist im rechten Teil der Figur dargestellt. Das ursprünglich in der Programmerzeugungseinheit erzeugte Projekt bzw. der ursprünglich erzeugte gesamte Programmcode, wie er in der zweiten Spalte der Figur dargestellt ist, ist vorteilhaft weiterhin in einem Speicher der Programmerzeugungseinheit gespeichert; in einer alternativen Ausführungsform kann dieser Code aber auch aus den ursprünglichen Befehlen wiederhergestellt werden. Weiter wird in einem weiteren Speicherbereich das von der Programmierumgebung PU zu der Programmerzeugungseinheit PE zurück übertragene Projekt gespeichert. Als ein wesentlicher Verfahrensschritt wird nun ein Vergleich V vorgenommen, der für jeden der Befehle MACRO1, PL2, MACR03, PL4 und damit für jeden der Abschnitte CF1, CF2-B, CF3, CF4 vorgenommen wird. Für den zuerst zu verarbeitenden Abschnitt CF1 wird aus der Kommentarzeile /*MACRO1*/ die Information entnommen, dass der nachfolgende Abschnitt CF1, der von der Programmierumgebung PU an die Programmerzeugungseinheit PE zurück übermittelt wurde, der Befehl MACRO1 zugrunde liegt. Entsprechend wird aus dem Befehl MACRO1 der entsprechende Abschnitt CF1 aus einem Speicher, der im Zuge der ursprünglichen Generierung G befüllt wurde, zurückgewonnen, oder - alternativ - neu erzeugt. Ein Vergleich der beiden Versionen des Abschnitts CF1 zeigt, dass dieser Abschnitt CF1 in der Programmierumgebung PU nicht geändert wurde, so dass - je nachdem, wie der Editor eingestellt ist - seitens der Programmerzeugungseinheit PE nicht der gesamte Code-Abschnitt CF1 dargestellt werden muss, sondern lediglich der zugrunde liegende Befehl MACRO1. Selbiges gilt für die später zu verarbeitenden Abschnitte CF3, CF4. Für den dem Kommentar /*PL2*/ nachfolgenden Code-Abschnitt CF2-B ergibt der Vergleich mit dem ursprünglichen Abschnitt CF2, das Änderungen vorliegen. Entsprechend wird vorteilhaft bei einer grafischen Ausgabe bzw. Darstellung der zugrunde liegende Befehl PL2 entsprechend gekennzeichnet, beispielsweise indem er als Befehl PL2-B dargestellt wird. Zusätzlich wird der geänderte Code-Abschnitt CF2-B oder zumindest die beim Vergleich V zum ursprünglichen Abschnitt CF2 identifizierten Änderungen dargestellt; dies ist in der Figur durch den Block CF2-B visualisiert worden. Wie gesagt, genügt für die nachfolgenden Abschnitte CF3, CF 4 jeweils die Darstellung der Befehle MACR03, PL4.

In einem weiteren, nicht dargestellten Verfahrensschritt kann entschieden werden, ob das Bibliotheks-Element, aus dem der Abschnitt CF2 ursprünglich gewonnen wurde, nunmehr durch den geänderten Abschnitt CF2-B ersetzt wird. Alternativ können auch die vorgenommenen Änderungen verworfen oder nur für den vorliegenden Programmcode angenommen werden, oder aber auf eine andere Art und Weise auf das dargestellte Ergebnis reagiert werden. In gebräuchlichen Systemen sind Objekte im Planungsprojekt, deren Ursprung Bibliotheksobjekte sind, sog. "Instanzen" dieser Bibliotheksobjekte. Wenn also Änderungen nicht verworfen, aber auch nicht in die Bibliothek übernommen werden, spricht man auch von "instanzspezifischen Änderungen/Anpassungen" im Projekt.

Durch das vorstehend skizzierte Verfahren kann bei einer Rückführung von optimiertem Code in ein Engineering-System ein Abgleich mit dem dort vorhandenen älteren Stand des Programmcodes vorgenommen werden, wobei durch die Verwendung von Kommentaren ein Vergleich vereinfacht und zuverlässiger wird.

## Patentansprüche

1. Verfahren für den bidirektionalen Austausch von Programmcode zwischen einer Programmerzeugungseinheit (PE) und einer Programmierumgebung (PU),
wobei in der Programmerzeugungseinheit (PE) anhand von Befehlen (MACRO1, PL2, MACR03, PL4) einer Meta-Beschreibungssprache aus Bibliotheks-Elementen jeweils Abschnitte (CF1,..., CF4) von Programmcodes erzeugt werden, wobei die Summe der Abschnitte (CF1,..., CF4) einen gesamten Programmcode ergibt,
wobei dieser gesamte Programmcode an die Programmierumgebung (PU) übertragen und mittels der Programmierumgebung (PU) bearbeitet wird, und
wobei der bearbeitete gesamte Programmcode zu der Programmerzeugungseinheit (PE) zurück übertragen wird,
**dadurch gekennzeichnet,**
**dass** bei der Erzeugung des Programmcodes in dem erzeugten gesamten Programmcode jedem der Abschnitte (CF1,..., CF4) als ein Kommentar (/*MACRO1*/, /*PL2*/, /*MACRO3*/, /*PL4*/) der zugrunde liegende Befehl (MACRO1, PL2, MACR03, PL4) der Meta-Beschreibungssprache zugeordnet und zu dem jeweiligen Abschnitt (CF1,..., CF4) gespeichert wird,
**dass** nach der Rückübertragung des gesamten, bearbeiteten Programmcodes durch die Programmerzeugungseinheit (PE) für jeden Abschnitt (CF1, CF2-B, CF3, CF4) des Programmcodes anhand des im Kommentar (/*MACRO1*/, /*PL2*/, /*MACRO3*/, /*PL4*/) verzeichneten Befehls (MACRO1, PL2, MACR03, PL4) und dem dadurch identifizierten Abschnitt (CF1,..., CF4) des ursprünglich erzeugten Programmcodes und anhand des zugeordneten Abschnitts (CF1, CF2-B, CF3, CF4) im zurück übertragenen gesamten Programmcode anhand eines Vergleichs (V) festgestellt wird, ob der betreffende Abschnitt (CF1, CF2-B, CF3, CF4) bearbeitet wurde, und
**dass** in der Programmerzeugungseinheit (PE) die aus der Bearbeitung in der Programmierumgebung (PU) resultierenden Änderungen (CF2-B) im zurück übertragenen Programmcode kenntlich gemacht werden.

2. Verfahren nach Patentanspruch 1,
**dadurch gekennzeichnet,**
**dass** diejenigen Abschnitte (CF1, CF2-B, CF3, CF4) des zurück übertragenen Programmcodes, die in der Programmierumgebung (PU) nicht verändert wurden, in Form der diesen zugrunde liegenden Befehle (MACRO1, PL2, MACR03, PL4) der Meta-Beschreibungssprache dargestellt werden, und
**dass** veränderte Abschnitte (CF2-B) vollständig als Programmcode dargestellt werden.

3. Verfahren nach einem der vorhergehenden Patentansprüche,
**dadurch gekennzeichnet,**
**dass** im Zuge einer zumindest abschnittsweisen Darstellung des zurück übertragenen Programmcodes auch der korrespondierende ursprüngliche Programmcode zumindest abschnittsweise dargestellt wird.

4. Verfahren nach Patentanspruch 3,
**dadurch gekennzeichnet,**
**dass** in einer zumindest abschnittsweisen Darstellung des ursprünglichen Programmcodes diejenigen Abschnitte (CF1, CF3, CF4), die in der Programmierumgebung (PU) nicht verändert wurden, nur in Form der diesen zugrunde liegenden Befehle (MACRO1, PL2, MACR03, PL4) der Meta-Beschreibungssprache dargestellt werden, und
**dass** veränderte Abschnitte (CF2-B) vollständig als Programmcode dargestellt werden.

5. Verfahren nach einem der Patentansprüche 3 oder 4,
**dadurch gekennzeichnet, dass**
durch die Programmerzeugungseinheit (PE) nach der Rückübertragung des Programmcodes dieser in zumindest zwei Schichten dargestellt wird, wobei in einer ersten Schicht der ursprüngliche unveränderte Programmcode dargestellt wird, und
wobei in einer zweiten Schicht der zurück übertragene bearbeitete Programmcode dargestellt wird, und
dass mittels gleichzeitiger Darstellung der ersten und der zweiten Schicht die aus der Bearbeitung resultierenden Unterschiede sichtbar gemacht werden.

6. Verfahren nach einem der vorhergehenden Patentansprüche,
**dadurch gekennzeichnet,**
**dass** die aus der Bearbeitung resultierenden Veränderungen (CF2-B) aus den zurück übertragenen Abschnitten (CF1, CF2-B, CF3, CF4) des Programmcodes in die jeweils zugrunde liegenden ursprünglichen Bibliotheks-Elemente übernommen werden.

7. Verfahren nach einem der vorhergehenden Patentansprüche,
**dadurch gekennzeichnet,**
**dass** die Kommentare (/*MACR01*/, /*PL2*/, /*MACR03*/, /*PL4*/) mit den darin verzeichneten Befehlen (MACRO1, PL2, MACR03, PL4) der Meta-Beschreibungssprache derart markiert sind, dass diese bei einer weiteren Verarbeitung des Programmcodes nicht verarbeitet werden.

8. Verfahren nach Patentanspruch 7,
**dadurch gekennzeichnet,**
**dass** die weitere Verarbeitung des Programmcodes das Kompilieren in einen ausführbaren Code umfasst.

9. Verfahren nach einem der vorhergehenden Patentansprüche,
**dadurch gekennzeichnet,**
**dass** die Kommentare (/*MACRO1*/, /*PL2*/, /*MACRO3*/, /*PL4*/) mit den darin verzeichneten Befehlen (MACRO1, PL2, MACR03, PL4) zumindest gegen Veränderungen in der Programmierumgebung (PU) gesperrt werden.

10. Programmerzeugungseinheit (PE), eingerichtet für den bidirektionalen Austausch von Programmcode zwischen einer und einer Programmierumgebung (PU),
wobei die Programmerzeugungseinheit (PE) zur Erzeugung des Programmcodes anhand von Befehlen (MACRO1, PL2, MACR03, PL4) einer Meta-Beschreibungssprache aus Bibliotheks-Elementen jeweils Abschnitte (CF1,..., CF4) eingerichtet ist,
wobei die Summe der Abschnitte (CF1,..., CF4) einen gesamten Programmcode ergibt,
wobei die Programmerzeugungseinheit (PE) zur Übertragung dieses gesamten Programmcodes zu dessen Bearbeitung an die Programmierumgebung (PU) eingerichtet ist, und
wobei die Programmerzeugungseinheit (PE) zum Empfang des bearbeiteten gesamten Programmcodes von der Programmierumgebung (PU) eingerichtet ist,
**dadurch gekennzeichnet,**
**dass** die Programmerzeugungseinheit (PE) derart ausgestaltet ist,
**dass** bei der Erzeugung des Programmcodes in dem erzeugten gesamten Programmcode jedem der Abschnitte (CF1,..., CF4) als ein Kommentar (/*MACRO1*/, /*PL2*/, /*MACRO3*/, /*PL4*/) der zugrundeliegende Befehl (MACRO1, PL2, MACR03, PL4) der Meta-Beschreibungssprache zugeordnet und zu dem jeweiligen Abschnitt (CF1,..., CF4) gespeichert wird,
**dass** nach der Rückübertragung des gesamten, bearbeiteten Programmcodes durch die Programmerzeugungseinheit (PE) für jeden Abschnitt (CF1, CF2-B, CF3, CF4) des Programmcodes anhand des im Kommentar (/*MACRO1*/, /*PL2*/, /*MACR03*/, /*PL4*/) verzeichneten Befehls (MACRO1, PL2, MACR03, PL4) und dem dadurch identifizierten Abschnitt (CF1,..., CF4) des ursprünglich erzeugten Programmcodes und anhand des zugeordneten Abschnitts (CF1, CF2-B, CF3, CF4) im zurück übertragenen gesamten Programmcode anhand eines Vergleichs (V) festgestellt wird, ob der betreffende Abschnitt (CF1, CF2-B, CF3, CF4) bearbeitet wurde, und
**dass** die aus der Bearbeitung in der Programmierumgebung (PU) resultierenden Änderungen (CF2-B) im zurück übertragenen Programmcode kenntlich gemacht werden.
